# EUROPEAN PATENT APPLICATION

(11) **EP 4 545 383 A1**
(43) Date of publication of application: **30.04.2025**
(21) Application number: 22951772.7
(22) Date of filing: 31.10.2022
(51) Int. Cl.: B62D 25/20, B60N 2/005, B60N 2/015

(54) **FLOOR ASSEMBLY AND VEHICLE**

(30) Priority: 20.07.2022 CN 202210857789
(71) Applicant: Voyah Automobile Technology Company Ltd., Hanyang District Wuhan City, Hubei 430050 (CN)
(72) Inventor: YU, Botao, Wuhan, Hubei 430050 (CN); LIANG, Lei, Wuhan, Hubei 430050 (CN); CHEN, Daolin, Wuhan, Hubei 430050 (CN); HOU, Chunsheng, Wuhan, Hubei 430050 (CN); ZHOU, Zhongbiao, Wuhan, Hubei 430050 (CN)
(74) Representative: Groth & Co. KB
(86) International application number: PCT/CN2022/128802
(87) International publication number: WO 2024/016509

(57) **Abstract**

A floor assembly. Two longitudinal beams (100) of a floor assembly (1000) are both connected to a floor panel (500), and a cross beam assembly (800) comprises a cross beam (200) and two or more seat brackets (230), wherein the cross beam (200) comprises a main beam (210) connected to the floor panel (500) and connecting assemblies (220) connected to two ends of the main beam (210); the connecting assemblies (220) are connected to the longitudinal beams (100); the seat brackets (230) are connected to the main beam (210); the height of the connecting assemblies (220) and/or the seat brackets (230) is adjustable; and in an axial direction of the longitudinal beams (100), gaps exist between the seat brackets (230) and the main beam (210). A vehicle comprising the floor assembly. The floor assembly can be adapted to different vehicle models, thereby improving the universality and saving on manufacturing and mounting costs.

## Description

### CROSS-REFERENCE TO RELATED APPLICATIONS

The present application claims priority to the Chinese patent application No. 202210857789.7 filed on July 20, 2022, and entitled "FLOOR ASSEMBLY AND VEHICLE", the entire content of which is incorporated herein by reference.

### TECHNICAL FIELD

The present disclosure belongs to the technical field of automobile floor assemblies and specifically relates to a floor assembly and a vehicle.

### BACKGROUND

An automobile floor assembly is an important part of an automobile, including a cross beam, a floor, and two longitudinal beams, the two longitudinal beams are arranged opposite each other, two ends of the cross beam are connected to the longitudinal beams respectively, and the cross beam and the longitudinal beams are all connected to the floor. As automobile models diversify, heights of automobile bodies and positions of automobile seats will also be adjusted, which will increase manufacturing and mounting costs.

### SUMMARY OF THE INVENTION

The present disclosure provides a floor assembly and a vehicle, so that the floor assembly can be adapted to different vehicle models, thereby improving the universality and saving on manufacturing and mounting costs.

On the one hand, the present disclosure provides a floor assembly, including a floor panel, a cross beam assembly, and two longitudinal beams arranged opposite each other. The two longitudinal beams are both connected to the floor panel. The cross beam assembly includes: a cross beam, including a main beam connected to the floor panel and connecting assemblies connected to two ends of the main beam, wherein the connecting assemblies are connected to the longitudinal beams; and two or more seat brackets, connected to the main beam; wherein a height of the connecting assembly and/or the seat bracket is adjustable, and in an axial direction of the longitudinal beams, gaps exist between the seat brackets and the main beam.

On the other hand, the present disclosure further provides a vehicle, including the foregoing floor assembly.

The floor assembly provided by the present disclosure realizes the adjustment of a relative height of the main beam and the longitudinal beams because the height of the connecting assemblies is adjustable and the connecting assemblies are connected to the longitudinal beams and the main beam respectively, which may meet the needs of different vehicle models with different relative heights of the main beam and the longitudinal beams. Since the height of the seat bracket is adjustable, a height of a seat fixed to the main beam may be adjusted through the seat brackets. Since the gaps in the axial direction of the longitudinal beams exist between the seat brackets and the main beam, a size of the gaps may be adjusted according to position needs when the seat brackets are welded, thus meeting the needs of a position adjustment of the seat in the axial direction of the longitudinal beams, i.e., in an X direction. A position adjustment of a fixture itself during welding may realize the needs of a position adjustment of the seat brackets in an axial direction of the main beam, i.e. in a Y direction. An adjustment of a relative height of the cross beam and the longitudinal beams is realized through the connecting assemblies, and position adjustments of the seat in the X direction, Y direction, and Z direction are realized through the seat brackets. The floor assembly may be applicable to various vehicle models, thereby improving the universality.

### BRIEF DESCRIPTION OF THE DRAWINGS

FIG. 1 shows a schematic structural diagram of a floor assembly according to some embodiments of the present disclosure.
FIG. 2 shows a schematic structural diagram of a reinforcing skeleton assembly, a cross beam assembly, and a reinforcing structure of FIG. 1.
FIG. 3 shows an exploded view of a cross beam of FIG. 1.
FIG. 4 shows a partially enlarged diagram of a seat bracket of FIG. 3.
FIG. 5 shows a partially enlarged diagram of a seat bracket of FIG. 3.
FIG. 6 shows a top view of a seat bracket of FIG. 2.
FIG. 7 shows a sectional view of a seat bracket of FIG. 2 in an axial direction of a longitudinal beam.
FIG. 8 shows a sectional view of a connecting assembly of FIG. 2 in an axial direction of a cross beam.
FIG. 9 shows another sectional view of a connecting assembly of FIG. 2 in an axial direction of a cross beam.
FIG. 10 shows a top view a floor of FIG. 1.
FIG. 11 shows a sectional view of A-A of FIG. 10.
FIG. 12 shows a top view of a middle reinforcing member of a front end structure assembly of FIG. 2.
FIG. 13 shows a sectional view of a middle reinforcing member of a front end structure assembly of FIG. 2 in an axial direction of a cross beam.
FIG. 14 shows a schematic structural diagram of a connection between a cross beam assembly and a column B.

### DETAILED DESCRIPTION

An automobile floor assembly is an important part of an automobile, including a cross beam, a floor, and two longitudinal beams, the two longitudinal beams are arranged opposite each other, two ends of the cross beam are connected to the longitudinal beams respectively, and the cross beam and the longitudinal beams are all connected to the floor. As automobile models diversify, sizes of corresponding automobile floor assemblies need to be adjusted accordingly. At present, a cross beam lap edge and a turning edge are connected to a longitudinal beam, which cannot be adapted to connections of cross beams and longitudinal beams with other relative heights. If one wants to adjust a relative height of a cross beam and a longitudinal beam, it is necessary to roll and manufacture the cross beam again, which increases a manufacturing cost. In addition, a mounting position of a seat will also be adjusted according to the different vehicle models, whereas the current seat is mounted on a seat bracket of the cross beam, and due to an integrated fixed structure of the seat bracket, the position is determined and cannot be adjusted according to the vehicle models. If the position of the seat bracket is to be adjusted, a seat bracket in a different size as well as matched with a newly manufactured cross beam needs to be manufactured again, which will also increase the manufacturing cost, and in order to be matched with the newly manufactured cross beam and seat bracket, a cost of mounting tools will also be increased.

In order to make the floor assembly applicable to different vehicle models and improve its universality, the present disclosure provides a floor assembly and a vehicle.

The present disclosure provides a floor assembly. A height between a cross beam and a longitudinal beam of the floor assembly is adjustable, a height of a seat bracket, a length direction of a vehicle body, and a width direction of the vehicle body are all adjustable, and the cross beam and the seat bracket may be applicable to different vehicle models, thereby improving the universality.

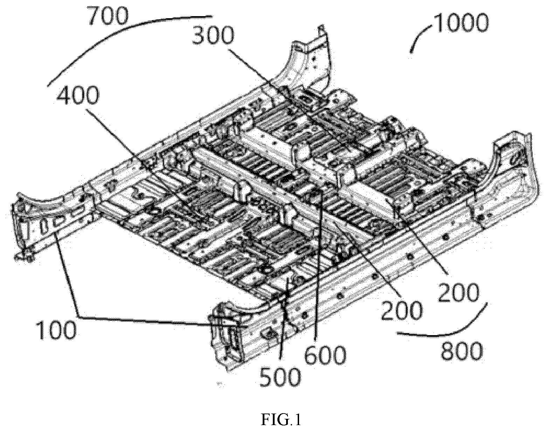

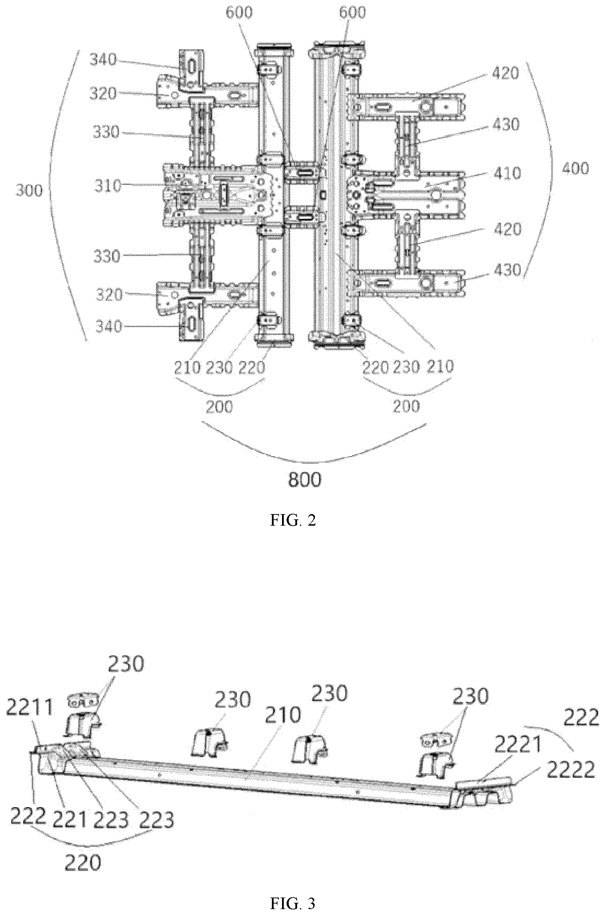

Referring to FIG. 1 and FIG. 2, the floor assembly 1000 includes a floor panel 500, a cross beam assembly 800, and two longitudinal beams 100 arranged opposite each other. The two longitudinal beams 100 are both connected to the floor panel 500. The cross beam assembly 800 includes a cross beam 200 and two or more seat brackets 230. The cross beam 200 includes a main beam 210 connected to the floor panel 500 and connecting assemblies 220 connected to two ends of the main beam 210. The connecting assemblies 220 are connected to the longitudinal beams 100. The two or more seat brackets 320 are provided and are connected to the main beam 210. A height of the connecting assemblies 220 and/or the seat brackets 230 is adjustable. In an axial direction of the longitudinal beams 100, gaps exist between the seat brackets 230 and the main beam 210.

An adjustment of a relative height of the main beam 210 and the longitudinal beams 100 is realized because the height of the connecting assemblies 220 is adjustable and the connecting assemblies 220 are connected to the longitudinal beams 100 and the main beam 210 respectively, which may meet the needs of different vehicle models with different relative heights of the main beam 210 and the longitudinal beams 100. The height of the seat brackets 230 is adjustable, and then a height of a seat fixed to the main beam 210 may be adjusted by adjusting the seat brackets 230. The gaps in the axial direction of the longitudinal beams 100 exist between the seat brackets 230 and the main beam 210, and a size of the gaps may be adjusted according to position needs when the seat brackets 230 are welded, thus meeting the needs of a position adjustment of the seat in the axial direction of the longitudinal beams 100, i.e., in an X direction. A position adjustment of a fixture itself during welding may realize the needs of a position adjustment of the seat brackets 230 in an axial direction of the main beam 210, i.e. in a Y direction. An adjustment of a relative height of the cross beam 200 and the longitudinal beams 100 is realized through the connecting assemblies 220, and position adjustments of the seat in the X direction, Y direction, and Z direction are realized through the seat brackets 230, which may be applicable to various vehicle models, thereby improving the universality.

Referring to FIG. 3 to FIG. 5, in some embodiments, the height of the seat brackets 230 is adjustable. Each seat bracket 230 includes a first support member 231 connected to the main beam 210 and a second support member 232 connected to the seat, and in a vertical direction, the first support member 231 and the second support member 232 at least partially overlap and are fixedly connected. Specifically, the second support member 232 is provided with a support cavity 2321 with an opening, in the vertical direction, the first support member 231 extends into the support cavity 2321, and an inner wall of the support cavity 2321 and the first support member 231 at least partially overlap and are fixed. During mounting, the first support member 231 is first connected to the main beam 210, then the second support member 232 is placed above the first support member 231, and the opening of the support cavity 2321 is oriented toward the first support member 231, so that the first support member 231 extends into the support cavity 2321 of the second support member 232. When the inner wall of the support cavity 2321 and the first support member 231 partially overlap and the second support member 232 reaches a target height, the first support member 231 is fixedly connected to the second support member 232, for example, a fixed connection between the first support member 231 and the second support member 232 is realized by welding. The seat bracket 230 formed in this way may realize that a mounting height of the seat is equal to the target height; and a debugging cycle is short, and the efficiency is high.

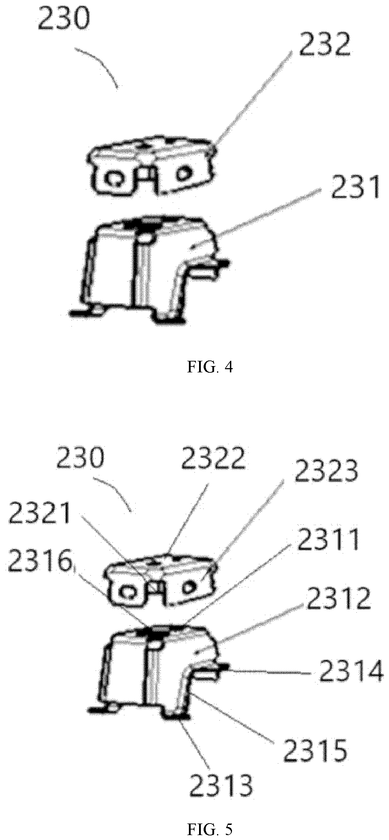

Referring to FIG. 4 to FIG. 6, in some embodiments, the first support member 231 and the second support member 232 include support plates 2311 and 2322 respectively and a plurality of mounting plates 2312 and 2323 connected to the support plates 2311 and 2322, outer side faces of the plurality of mounting plates 2312 of the first support member 231 are connected to inner side faces of the plurality of mounting plates 2323 of the second support member 232. The support plate 2311 of the first support member is provided with a first connecting member 2316 for being connected to a second connecting member, and the mounting plate 2312 of the first support member is provided with a connecting hole 2322a for the second connecting member to extend into. The support plates 2311 and 2322 may be arranged horizontally, the mounting plates 2312 and 2323 may be arranged outside the support plates 2311 and 2322 in an enclosing mode, and the number of the mounting plates 2312 and 2323 may be set to four, or of course other numbers, such as three or five, which is not limited herein. When the number of the mounting plates 2312 and 2323 is set to four, in the four mounting plates 2312 and 2323, two mounting plates 2312 and 2323 may be arranged opposite each other in the axial direction of the main beam 210, and the other two mounting plates 2312 and 2323 may be arranged opposite each other in a width direction of the main beam 210. Such an arrangement may improve the connection stability of the support plates 2311 and 2322 and the main beam 210, thereby ensuring the connection stability of the first support member 231 and the second support member 232 and improving the mounting strength of the seat. The first connecting member 2316 may be a nut, and the first connecting member 2316 is welded to the first support member 231. Specifically, the first connecting member 2316 is welded to the support plate 2311. The second connecting member is a bolt, and the bolt extends into the connecting hole 2322a of the support plate 2322, enters the support cavity 2321, and is in a threaded connection with the first connecting member 2316. Such a connection mode ensures both the connection stability of the seat and the ease of dismounting and maintenance of the seat. **In** other embodiments, a plurality of first connecting members 2316 may be provided. For example, two first connecting members 2316 are provided. Correspondingly, the number of the second connecting members is the same as the number of the first connecting members 2316, and the number of the connecting holes 2322a of the support plate 2322 is the same as the number of the first connecting members 2316. Arrangements of the plurality of first connecting members 2316 and second connecting members may further improve the connection stability of the seat. The first connecting members 2316 may be determined according to the size and strength of the support plate 2311, and similarly, the number of the second connecting members may be determined according to the size and strength of the support plate 2322, which is not specifically limited herein.

Continuing to refer to FIG. 4 to FIG. 6, in some embodiments, in each first support member 231, two mounting plates 2312 arranged opposite each other in the axial direction of the main beam 210 are provided with first turning edges 2313, second turning edges 211 for being connected to the floor panel 500 are arranged on two sides of the main beam 210 in the width direction, and the first turning edges 2313 are connected to the second turning edges 211. The two mounting plates 2312 arranged opposite each other in the axial direction of the main beam 210 may be arranged vertically. Of course, in other embodiments, upper end spacing of the two mounting plates 2312 arranged opposite each other in the axial direction of the main beam 210 is smaller than lower end spacing, so that an upper size of the first support member 231 is smaller than a lower size, which may not only improve the connection stability of the main beam 210 but also reduce a size of the support cavity 2321 formed for the first support member 231 to extend into and improve space utilization.

In some embodiments, the support plates 2311 and 2322 and the plurality of mounting plates 2312 and 2323 are of an integrated structure, that is, the first support member 231 and the second support member 232 are both of an integrated structure. The first support member 231 and the second support member 232 may be obtained by stamping and molding with steel plates. In other embodiments, the first support member 231 and the second support member 232 may also be of a split structure, the mounting plates 2312 and 2323 are welded to the support plates 2311 and 2322 to form the first support member 231 and the second support member 232 respectively, and a welding process for the first support member 231 and the second support member 232 of the split structure is more complex compared to integrated molding.

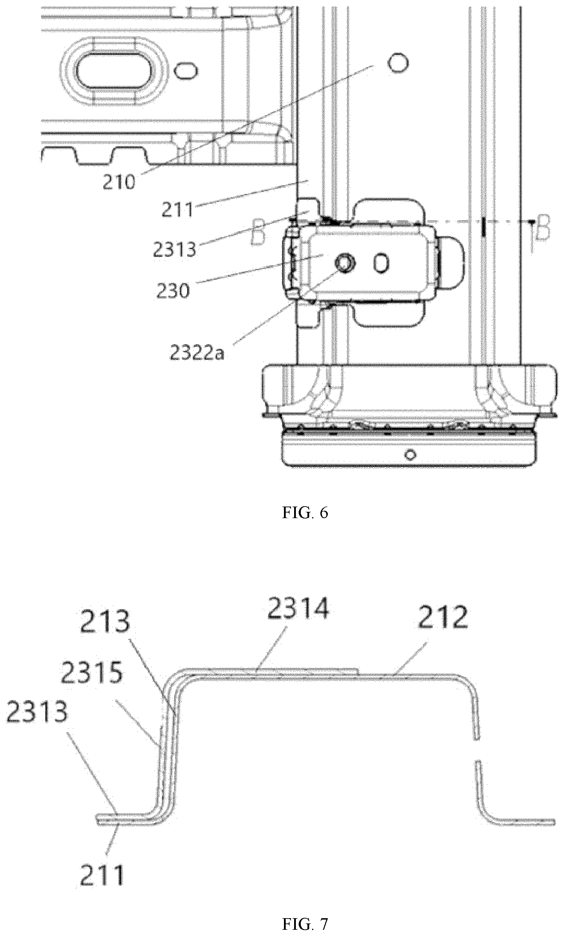

Referring to FIG. 7, in some embodiments, the main beam 210 has a top 212 and a side portion 213 adjacent to the top 212, the first support member 231 is provided with an adjusting portion 2315 and an abutting portion 2314 in contact with the top 212, and a gap exists between the adjusting portion 2315 and the side portion 213 in an axial direction perpendicular to the main beam 210. During mounting, the gap between the adjusting portion 2315 and the side portion 213 of the main beam 210 may be adjusted to a target position, then the first support member 231 is connected to the main beam 210, thereby ensuring the position adjustment of the seat bracket 230 in a length direction of a vehicle body, i.e., the X direction, so that the seat may be applicable to different vehicle models, improving the universality, a debugging cycle is short, and the efficiency is high. Specifically, the two mounting plates 2312 arranged opposite each other along an axis of the main beam 210 are provided with notches for accommodating the main beam 210. A part of each of the two mounting plates 2312 located on a side of the main beam 210 in the width direction is provided with a first turning edge 2313, the side portion 213 of the main beam 210 is provided with a second turning edge 211, a top 212 of each of the notches forms an abutting portion 2314, and a side portion 213 of each of the notches forms an adjusting portion 2315. In some embodiments, the abutting portion 2314 may further be provided with a third turning edge, and the third turning edge is arranged on the top 212 of the main beam 210 in a pressing mode. Preferably, the gap between the adjusting portion 2315 and the side portion 213 may be 2 mm.

Referring to FIG. 3, FIG. 8, and FIG. 9, in some embodiments, the height of the connecting assemblies 220 is adjustable. The connecting assemblies 220 include longitudinal beam connecting members 222 connected to the longitudinal beams 100 and cross beam connecting members 221 connected to the main beam 210, and in a vertical direction, the longitudinal beam connecting members 222 and the cross beam connecting members 221 at least partially overlap and are fixedly connected.

Each cross beam connecting member 221 is provided with a first connecting portion 2211, and each longitudinal beam connecting member 222 is provided with a second connecting portion 2221, wherein in the vertical direction, the first connecting portion 2211 and the second connecting portion 2221 at least partially overlap and are fixedly connected. When the longitudinal beams 100 and the cross beam 200 are mounted, the cross beam connecting members 221 are first connected to the main beam 210, the longitudinal beam connecting members 222 are connected to the longitudinal beams 100, and then the first connecting portions 2211 are connected to the second connecting portions 2221. Since the first connecting portions 2211 and the second connecting portions 2221 are opposite in position and at least partially overlap in the vertical direction, if it is required that the height of the main beam 210 is slightly larger than the height of the longitudinal beams 100, a height of the first connecting portions 2211 is slightly larger than a height of the second connecting portions 2221, and if it is required that the height of the main beam 210 is slightly smaller than the height of the longitudinal beams 100, the height of the first connecting portions 2211 is slightly smaller than the height of the second connecting portions 2221. **In** the two cases, the first connecting portions 2211 and the second connecting portions 2221 overlap in the vertical direction, and then overlapping parts of the first connecting portions 2211 and the second connecting portions 2221 are connected by welding, so that the main beam 210 and the longitudinal beams 100 are both at the position of the target height, meeting the needs of different vehicle models with different relative heights of the main beam 210 and the longitudinal beams 100. Moreover, the connecting assemblies 220 adopt the split cross beam connecting members 221 and longitudinal beam connecting members 222 for connections, which may save a large amount of debugging time for mounting tools of the cross beam 200 and the longitudinal beams 100, and improve the mounting efficiency.

The first connecting portions 2211 and the second connecting portions 2221 may be connected by welding.

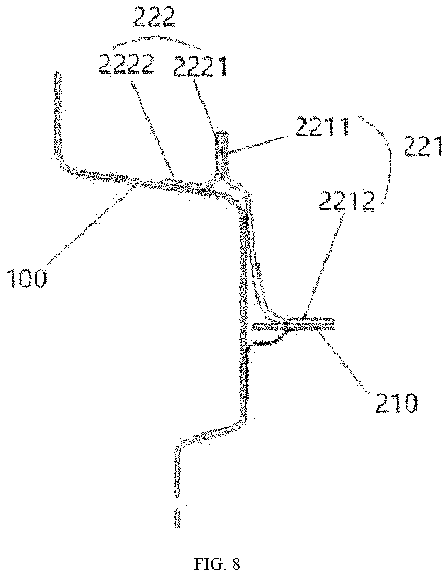

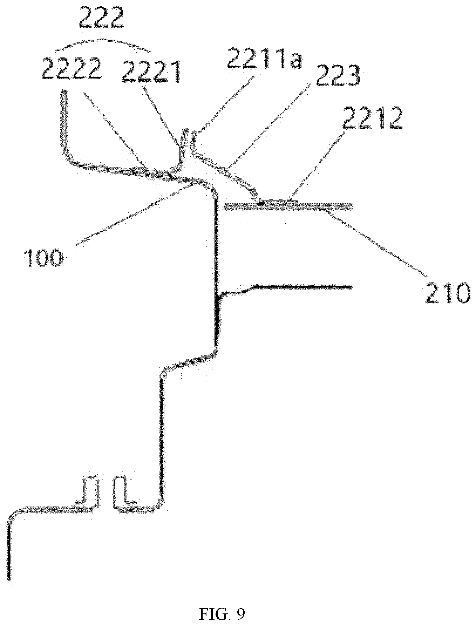

Continuing to refer to FIG. 8 and FIG. 9, in some embodiments, each cross beam connecting member 221 includes a first connecting portion 2211 and a cross beam 200 connecting portion 2212 for being connected to the main beam 210, and a reinforcing portion 223 is arranged at a part where the cross beam 200 connecting portion 2212 and the first connecting portion 2211 are connected. The cross beam 200 connecting portion 2212 may be arranged in the axial direction of the main beam 210, and the cross beam 200 connecting portion 2212 is connected to the top 212 of the main beam 210, so that an included angle exists between the first connecting portion 2211 and the cross beam 200 connecting portion 2212. Therefore, the arrangement of the reinforcing portion 223 at the part where the cross beam 200 connecting portion 2212 and the first connecting portion 2211 are connected may improve the connection strength of the two and ensure the connection strength of the main beam 210 and the longitudinal beams 100.

In some embodiments, the reinforcing portion 223 is a convex rib. The first connecting portion 2211 is provided with an exhaust rib 2211a that communicates with an inner cavity enclosed by the convex rib as well as with the outside world. The reinforcing portion 223 may be a convex rib. Of course, in other embodiments, the reinforcing portion 223 may also be a reinforcing rib plate which is welded to the first connecting portion 2211 and the cross beam 200 connecting portion 2212. When the reinforcing portion 223 is the convex rib, the first connecting portion 2211 is provided with the exhaust rib 2211a that communicates with the inner cavity enclosed by the convex rib as well as with the outside world, which facilitates exhausting of air inside the convex rib when electrophoresis into a pool is performed to ensure an electrophoresis effect of an inner wall of the convex rib. The convex rib may be arranged in a cuboid shape, a cube shape or a cylindrical shape, which is not limited herein. The exhaust rib 2211a may exhaust the air inside the convex rib during electrophoresis into and out of the pool, and improve the strength of the cross beam connecting member 221. The exhaust rib 2211a may be arranged in a vertical direction, and an into-pool direction is in the axial direction of the longitudinal beam 100.

In some embodiments, a plurality of convex ribs may be arranged. The plurality of convex ribs are arranged at intervals. The inner cavity of each convex rib communicates with at least one exhaust rib 2211a. The number of the convex ribs may be determined according to the sizes of the first connecting portion 2211 as well as the cross beam 200 connecting portion 2212. Preferably, two convex ribs are provided. The two convex ribs are arranged at an interval in the axial direction of the longitudinal beams 100. The inner cavity of each convex rib may communicate with one exhaust rib 2211a and may also communicate with a plurality of exhaust ribs 2211a, but an excessive number of exhaust ribs 2211a may affect the connection strength between the first connecting portion 2211 and the second connecting portion 2221, therefore, the number of the exhaust ribs 2211a may be determined according to the connection strength and exhaust needs, which is not specifically limited. The arrangement of the exhaust rib 2211a may effectively improve the electrophoresis effect, and the cross beam connecting member 221 needs not be made of a galvanized plate, which may reduce the cost of raw materials.

In some embodiments, the cross beam connecting portion 2212 is provided with turning edges for being connected to the floor panel 500 and the longitudinal beam 100 respectively. The turning edges may be connected to the floor panel 500 as well as the longitudinal beams 100 by welding, which is high in strength and is stable, and the turning edges may improve the strength of the cross beam connecting member 221. Specifically, the cross beam 200 connecting portion 2212 extends out of the main beam 210 along two sides of the main beam 210 in the width direction and turns downward to form turning portions that are attached to the top 212 of the main beam 210, and the turning portions are provided with the turning edges for being connected to the floor panel 500. **In** addition, the sizes of the first connecting portion 2211 and the second connecting portion 2221 in the axial direction of the longitudinal beams 100 are larger than a width size of the main beam 210, which may improve the connection strength of the longitudinal beams 100 and the main beam 210.

Referring to FIG. 8, in some embodiments, the longitudinal beam connecting member 222 includes a longitudinal beam connecting portion 2222 for connecting the second connecting portion 2221 to the longitudinal beam 100. The cross beam connecting portion 2212 and the first connecting portion 2211 are of an integrated structure, and the longitudinal beam connecting portion 2222 and the second connecting portion 2221 are of an integrated structure. The cross beam connecting member 221 and the longitudinal beam connecting member 222 are each of an integrated structure, which may be obtained by stamping and molding, and the technology is simple. Of course, in other embodiments, the cross beam connecting member 221 may also be of a split structure, which is obtained by welding the cross beam connecting portion 2212 to the first connecting portion 2211. Similarly, the longitudinal beam connecting member 222 may also be of a split structure, which is obtained by welding the longitudinal beam connecting portion 2222 to the second connecting portion 2221, but the sizes of the cross beam connecting member 221 and the longitudinal beam connecting member 222 are relatively small, and the welding technology is more complex and not as simple as that of the integrated structure.

In some embodiments, the first connecting portion 2211 and the second connecting portion 2221 are both parallel to the vertical direction. The first connecting portion 2211 and the second connecting portion 2221 are connected by welding. The first connection portion 2211 and the second connection portion 2221 may also be at an included angle to the vertical direction. Preferably, the first connection portion 2211 and the second connection portion 2221 are both parallel to the vertical direction. The first connecting portion 2211 and the second connecting portion 2221 are connected by welding, which has high strength and good stability.

In addition, it needs to be noted that the cross beam connecting member 221 may be obtained by stamping and molding with a steel plate. Similarly, the longitudinal beam connecting member 222 may also be obtained by stamping and molding with a steel plate. That is to say, the first connecting portion 2211, the cross beam connecting portion 2212, the second connecting portion 2221, and the longitudinal beam connecting portion 2222 are all reinforcing structures.

In some embodiments, the cross beam connecting member 221 is fixedly connected to the longitudinal beam 100, the main beam 210, and the floor panel 500, which may improve the power connection strength among the main beam 210, the longitudinal beam 100, and the floor panel 500. In order to further improve the reinforcing effect of the cross beam connecting member 221, a cross beam 200 reinforcing member may further be provided with a reinforcing rib, and a position of the reinforcing rib may be adjusted as needed, e.g., the reinforcing rib is arranged on a connection part of the cross beam connecting member 221 at the longitudinal beam 100 and on a connection part of the cross beam connecting member 221 at the floor panel 500.

Referring to FIG. 1, in some embodiments, a plurality of cross beams 200 are provided, the plurality of cross beams 200 are arranged at intervals in the axial direction of the longitudinal beams 100. A reinforcing structure 600 extending in the axial direction of the longitudinal beams100 is arranged between every two adjacent cross beams 200 to improve the strength of the floor assembly 1000 in a length direction. Specifically, the floor panel 500 may be provided with a reinforcing rib as the reinforcing structure 600, or the adjacent cross beams 200 may be connected by reinforcing beams, and the reinforcing beams are connected to the floor panel 500 and are used as the reinforcing structure 600, which is not specifically limited. The number of the cross beams 200 may be set to two, at which point the floor assembly 1000 may be used as a front floor assembly 1000, and the seat brackets 230 may be mounted on both the two cross beam assemblies 800 for mounting and supporting the seat. The number of the cross beams 200 may further be set to three, four, or other numbers, at which point the floor assembly 1000 may be used as a rear floor assembly 1000.

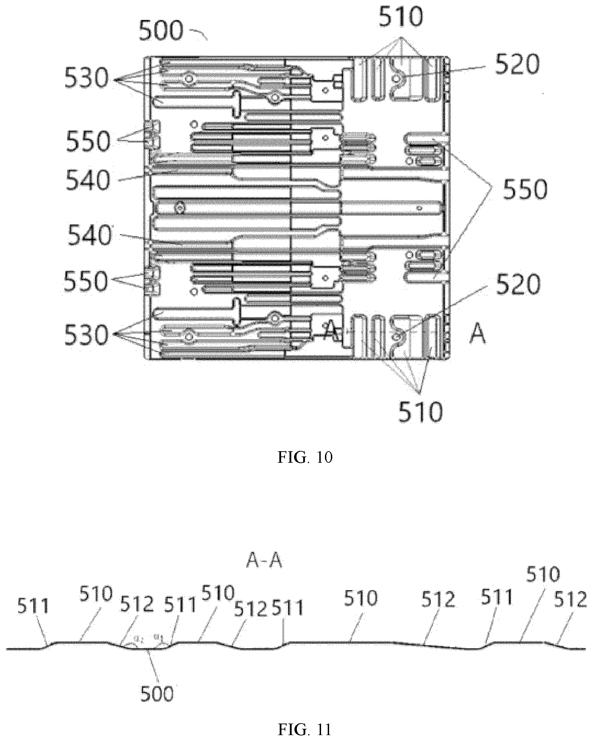

Referring to FIG. 1 and FIG. 10, in some embodiments, the floor panel 500 is of an integrated structure. The floor panel 500 is of the integrated structure, which may be obtained by stamping and molding with only one steel plate, and the integrated floor panel 500 of the present application reduces a development cost of the mounting tools compared to a floor panel 500 with a plurality of pieces connected in a split mode. When the floor assembly 1000 is used as the front floor assembly 1000, two cross beams 200 are provided, and the design of the two cross beams 200 allows for a larger size of the integrated floor panel 500. When the cross beams 200 are mounted, the arrangement of the cross beam 200 near a front end, i.e., a front cross beam of a front seat, mainly combines the maximization of a footstep space of a driver and takes into account the needs of a small offset collision. Arranging the front cross beam of the front seat at a position L1 from a footstep heel point may take into account the maximization of an arrangement space, and solve a problem that the front cross beam of the front seat does not have an enough reserved gap, resulting in that the driver is prone to contact with the front cross beam 200 of the front seat when retracting feet. Arranging the cross beam 200 near the rear end, i.e. a rear cross beam of the front seat, at a position L2 from a footstep heel point of a second row may take into account the maximization of an arrangement space, solve a problem that there is not enough space when a passenger of the second row extends feet, and also take into account a side column collision, and effectively preventing the deformation of a battery pack from a collision of a regulation point.

Referring to FIG. 10, in some embodiments, the floor panel 500 is provided with a penetrating rib 540 arranged in the axial direction of the longitudinal beams 100 in a penetrating manner, a plurality of longitudinal ribs 530 extending in the axial direction of the longitudinal beams 100, and a plurality of cross ribs 510 extending in an axial direction of the cross beam assembly 800, and the plurality of longitudinal ribs 530 and the plurality of cross ribs 510 are all distributed on two sides of the penetrating rib 540. The arrangement of the penetrating rib 540 may improve the strength of the floor panel 500 in the length direction, further facilitates flowing of an electrophoresis liquid when the floor panel 500 is in an electrophoresis technology, ensures the exhaust of a process into an electrophoresis pool in the length direction of the floor panel 500, which is also the axial direction of the longitudinal beams 100, and ensures an electrophoresis effect of the penetrating rib 540, and there will be no leakage point. The arrangement of the longitudinal ribs 530 may improve the rigidity of the floor panel 500 in the length direction, and the arrangement of the transverse ribs 510 may improve the strength of the floor panel 500 in the width direction, so that the combined arrangement of the penetrating rib 540, the longitudinal ribs 530, and the cross ribs 510 may improve the overall rigidity and modal state of the floor panel 500.

Continuing to refer to FIG. 10, in some embodiments, the plurality of longitudinal ribs 530 and the plurality of cross ribs 510 are all symmetrically distributed on the two sides of the penetrating rib 540. A position of the penetrating rib 540 may be used to arrange a middle passage, and the symmetrical arrangement of the plurality of longitudinal ribs 530 and the plurality of cross ribs 510 makes the strength of the floor panel 500 consistent on the two sides of the penetrating rib 540 and ensures that the strength performance of the vehicle is uniform on two sides of the vehicle body in the width direction. In other embodiments, the cross ribs 510 and the longitudinal ribs 530 may be arranged on two sides of the penetrating rib 540 respectively.

In some embodiments, the plurality of cross ribs 510 located on the same side of the penetrating rib 540 are arranged at intervals in the length direction of the floor panel 500. The cross ribs 510 are arranged at intervals in the length direction of the floor panel 500, which may further improve the strength of the floor panel 500 in the width direction. Of course, in other embodiments, the cross ribs 510 may further be arranged at intervals in the width direction of the floor panel 500, or the plurality of cross ribs 510 are arranged at intervals in the length direction and are arranged at intervals in the width direction in a combination of two arrangement modes, which is not limited herein. The plurality of longitudinal ribs 530 may be distributed on two sides of the cross ribs 510, and the plurality of longitudinal ribs 530 may also be arranged on one side of the cross ribs 510, which is not specifically limited herein.

In some embodiments, in the longitudinal ribs 530 and the cross ribs 510 located on the same side of the penetrating rib 540, the cross ribs 510 are arranged on one side of the longitudinal ribs 530, and the cross rib 510 closest to the longitudinal ribs 530 communicates with the longitudinal ribs 530. The cross rib 510 closest to the longitudinal rib 530 is also the outermost cross rib 510 and communicates with the longitudinal rib 530, so that exhausting of the cross rib 510 is ensured in a process that the floor panel 500 enters the electrophoresis pool in the length direction of the floor panel 500, the electrophoresis effect of the cross rib 510 is improved, and there is no leakage point.

In some embodiments, the plurality of cross ribs 510 located on the same side of the penetrating rib 540 are located at an end of the floor panel 500 in the width direction, or, the plurality of cross ribs 510 located on the same side of the penetrating rib 540 are located in the middle of the floor panel 500 in the width direction. In the case where the plurality of cross ribs 510 located on the same side of the penetrating rib 540 are located at the end of the floor panel 500 in the width direction, the cross ribs 510 are provided with first side walls 511 and second side walls 512 arranged oppositely in the length direction of the floor panel 500, and an included angle α1 between the first side walls 511 as well as the second side walls 512 and the floor panel 500 may be slightly larger. This may meet the exhausting effect during electrophoresis and also ensure the strength of the ends of the floor panel 500 in the width direction. In the case where the plurality of cross ribs 510 located on the same side of the penetrating rib 540 are located in the middle of the floor panel 500 in the width direction, an included angle α1 between the first side walls 511 as well as the second side walls 512 and the floor panel 500 may be slightly smaller. The cross ribs 510 are located in the middle of the floor panel 500, the strength of the edge of the floor panel 500 is lower, so the included angle between the side walls of the cross ribs 510 and the floor panel 500 is smaller, and the strength of the middle of the floor panel 500 is higher, thus further improving the rigidity and modal state of the floor panel 500. Preferably, the plurality of cross ribs 510 located on the same side of the penetrating rib 540 are arranged at the end of the floor panel 500 in the width direction.

In addition, a plurality of penetrating ribs 540 may be arranged, and the longitudinal ribs 530 may further be arranged between the penetrating ribs 540. A longitudinal rib 530 may also be arranged between the cross ribs 510 located on the same side of the penetrating rib 540 and the penetrating rib 540, and the longitudinal rib 530 may be arranged according to the space, which is not limited herein.

In some embodiments, a height of the longitudinal ribs 530 and a height of the cross ribs 510 are ≤ 5 mm, and a height of the penetrating rib 540 is ≤ 8 mm, meeting the requirement for adding acoustic envelope sealing of the battery pack.

Referring to FIG. 11, in some embodiments, the cross ribs 510 are provided with first side walls 511 and second side walls 512 arranged oppositely in the axial direction of the longitudinal beams 100, and an included angle α1 between the first side walls 511 and/or the second side walls 512 and the floor panel 500 is not less than a complementary angle of an electrophoresis angle α when the floor panel 500 enters the electrophoresis pool.

The included angle α1 between the first side walls 511 and/or the second side walls 512 and the floor panel 500 being not less than the complementary angle of the electrophoresis angle α when the floor panel 500 enters the electrophoresis pool refers to the following three cases. First case: the included angle α1 between the first side walls 511 and the floor panel 500 is greater than or equal to the complementary angle of the electrophoresis angle α when the floor panel 500 enters the electrophoresis pool. Second case: the included angle α1 between the second side walls 512 and the floor panel 500 is greater than or equal to the complementary angle of the electrophoresis angle α when the floor panel 500 enters the electrophoresis pool. Third case: the included angle α1 between the first side walls 511 and the floor panel 500 and the included angle α1 between the second side walls 512 and the floor panel 500 are both greater than or equal to the complementary angle of the electrophoresis angle α when the floor panel 500 enters the electrophoresis pool. The electrophoresis angle is an acute included angle between a liquid level of the electrophoresis liquid and the floor panel 500 in the process that the floor panel 500 enters the electrophoresis liquid.

In the first case, i.e., when the included angle α1 between the first side walls 511 and the floor panel 500 is greater than or equal to the complementary angle of the electrophoresis angle α when the floor panel 500 enters the electrophoresis pool, in a process of an electrophoresis painting technology of the floor panel 500, the floor panel 500 is placed into the electrophoresis pool in an order that the second side walls 512 enter the pool first and the first side walls 511 enter the pool later, and in a mode that an opening of a cavity faces downwards. In the process of entering the pool, the second side walls 512 are first submerged below the liquid level of the electrophoresis liquid, then the cavity gradually moves downwards, the opening left above the liquid level of the electrophoresis liquid gradually becomes smaller, and since the opening of the cavity is not completely submerged in the electrophoresis liquid at this time, a gas inside the cavity and above the electrophoresis liquid may be exhausted through the opening of the cavity. The included angle α1 between the first side walls 511 and the floor panel 500 is greater than or equal to the complementary angle of the electrophoresis angle α when the floor panel 500 enters the electrophoresis pool, so that the first side walls 511 are parallel to the liquid level of the electrophoresis liquid or an included angle exists between the first side walls 511 and the liquid level of the electrophoresis liquid. Under the condition that the first side walls 511 are parallel to the liquid level of the electrophoresis liquid, at the moment when the opening of the cavity is completely submerged in the electrophoresis liquid, a space inside the cavity is also just full of the electrophoresis liquid, and no gas-carrying space remains inside the cavity, so that the electrophoresis effect of an inner wall of the cavity is good. Under the condition that an included angle exists between the first side walls 511 and the liquid level of the electrophoresis liquid, one sides of the first side walls 511 away from the opening first enter under the liquid level of the electrophoresis liquid, one sides of the first side walls 511 close to the opening then enter under the liquid level of the electrophoresis liquid, the first side walls 511 and the opening of the cavity are simultaneously submerged under the liquid level of the electrophoresis liquid, and no gas-carrying space remains inside the cavity, so that the electrophoresis effect of the inner wall of the cavity is good.

Similarly, in the second case, i.e., when the included angle α1 between the second side walls 512 and the floor panel 500 is greater than or equal to the complementary angle of the electrophoresis angle α when the floor panel 500 enters the electrophoresis pool, the floor panel 500 is placed into the electrophoresis pool in an order that the first side walls 511 enter the pool first and the second side walls 512 enter the pool later, and in a mode that the opening of the cavity faces downwards. In the process of entering the pool, the first side walls 511 are first submerged below the liquid level of the electrophoresis liquid, then the cavity gradually moves downwards, the opening left above the liquid level of the electrophoresis liquid gradually becomes smaller, and since the opening of the cavity is not completely submerged in the electrophoresis liquid at this time, a gas inside the cavity and above the electrophoresis liquid may be exhausted through the opening of the cavity. The included angle α1 between the second side walls 512 and the floor panel 500 is greater than or equal to the complementary angle of the electrophoresis angle α when the floor panel 500 enters the electrophoresis pool, so that the second side walls 512 are parallel to the liquid level of the electrophoresis liquid or an included angle exists between the second side walls 512 and the liquid level of the electrophoresis liquid. Under the condition that the second side walls 512 are parallel to the liquid level of the electrophoresis liquid, at the moment when the opening of the cavity is completely submerged in the electrophoresis liquid, a space inside the cavity is also just full of the electrophoresis liquid, and no gas-carrying space remains inside the cavity, so that the electrophoresis effect of the inner wall of the cavity is good. Under the condition that an included angle exists between the second side walls 512 and the liquid level of the electrophoresis liquid, one sides of the second side walls 512 away from the opening first enter under the liquid level of the electrophoresis liquid, one sides of the second side walls 512 close to the opening then enter under the liquid level of the electrophoresis liquid, the second side walls 512 and the opening of the cavity are simultaneously submerged under the liquid level of the electrophoresis liquid, and no gas-carrying space remains inside the cavity, so that the electrophoresis effect of the inner wall of the cavity is good.

In the third case, i.e., when the included angle α1 between the first side walls 511 and the floor panel 500 and the included angle α1 between the second side walls 512 and the floor panel 500 are both greater than or equal to the complementary angle of the electrophoresis angle α when the floor panel 500 enters the electrophoresis pool, an order of entering the pool may be that the first side walls 511 enter the electrophoresis pool first, or that the second side walls 512 enter the electrophoresis pool first, both of which may ensure that no air-carrying space remains inside the cavity as well, and the electrophoresis effect of the inner wall of the cavity is good, and a specific process may refer to the depictions of the first case and the second case, which will not be repeated herein.

As may be seen from the above, as long as it is ensured that the angle α1 between at least one of the first side wall 511 as well as the second side wall 512 and the floor panel 500 is greater than or equal to the complementary angle of the electrophoresis angle α when the floor panel 500 enters the electrophoresis pool, it can be ensured that there is no leakage point in the process that the floor panel 500 enters the electrophoresis pool for electrophoresis painting, and a good electrophoresis effect is realized, thus further ensuring the strength of the floor panel 500. If the included angle α1 between the first side walls 511 and the floor panel 500 is smaller than the complementary angle of the electrophoresis angle α when the floor panel 500 enters the electrophoresis pool, the first side walls 511 enter the pool later, and the opening of the cavity faces downwards, in the process of entering the pool, the first side walls 511 and the liquid level of the electrophoresis liquid form a closed gas-carrying space in an enclosing mode, and a leakage point appears on the inner wall of the cavity, which affects the electrophoresis effect. The electrophoresis angle at the time of entering the pool is the included angle between the floor body and the electrophoresis liquid level, the electrophoresis angle at the time of entering the pool may be 25°, and the included angle α1 may be 155°.

In some embodiments, the included angle α1 is not greater than 175°. If the included angle α1 between at least one of the first side wall 511 as well as the second side wall 512 and the floor panel 500 exceeds 175°, the size of the side wall corresponding to the included angle exceeding 175° will be too large, and the angle itself is larger and close to 180°, and occupies space. Moreover, the included angle α1 of more than 175° will make the cross ribs 510 less effective in improving the strength of the floor panel 500.

In some embodiments, the number of the cross ribs 510 is two or more, and two or more cross ribs 510 are distributed at intervals in the length direction of the floor panel 500. The plurality of cross ribs 510 arranged at intervals may further improve the strength of the floor panel 500. In some embodiments, in the included angle between the first side wall 511 and the floor panel 500 as well as the included angle between the second side wall 512 and the floor panel 500, one included angle is greater than or equal to the complementary angle of the electrophoresis angle α when the floor panel 500 enters the electrophoresis pool, and the other included angle is greater than or equal to a complementary angle of an electrophoresis angle β when the floor panel 500 exits the electrophoresis pool. In the electrophoresis technology, when the second side walls 512 enter the pool first and the first side walls 511 enter the pool later, the first side walls 511 exit the pool first and the second side walls 512 exit the pool later, the included angle between the second side walls 512 and the floor panel 500 is greater than or equal to the complementary angle of the electrophoresis angle β at the time of exiting the electrophoresis pool, and the electrophoresis angle β at the time of exiting the electrophoresis pool is an acute included angle between the floor panel 500 and the electrophoresis liquid at the time of exiting the pool. The electrophoresis angle β at the time of exiting the electrophoresis pool may be 15°, and the included angle between the second side walls 512 and the floor panel 500 may be 165°. Controlling the included angle between the second side walls 512 and the floor panel 500 to be greater than or equal to the complementary angle of the electrophoresis angle β at the time of exiting the electrophoresis pool allows for exhausting in the process that the floor panel 500 exits the pool, ensuring a smooth process of exiting the pool.

In some embodiments, each of two ends of the floor panel 500 in the width direction is provided with at least two cross ribs 510, and the position distribution of the cross ribs 510 for a large sized floor may ensure the modal state of the entire floor. Preferably, the number of the cross ribs 510 at each of the two ends in the width direction may be set to four, the cross ribs are located at a rear end of the floor panel 500, and the foremost cross rib 510 is connected to the longitudinal rib 530. The four cross ribs 510 meet the rigidity requirements of the automobile floor without adding weight.

Referring to FIG. 10, in some embodiments, the floor panel 500 is provided with liquid discharge holes 520, the liquid discharge holes 520 are located between the cross ribs 510, and the cross ribs 510 are provided with avoidance portions that avoid the liquid discharge holes 520. After the floor panel 500 enters the electrophoresis pool for electrophoresis, the floor panel 500 needs to be taken out from the electrophoresis pool. In a process of taking out, residual electrophoresis liquid may remain between the cross ribs 510, and the liquid discharge holes 520 between the cross ribs 510 may discharge the electrophoresis liquid remaining between the two cross ribs 510, avoiding that excessive electrophoresis liquid remains between the two cross ribs 510 to affect the aesthetics and cause waste of the electrophoresis liquid.

In some embodiments, eight cross ribs 510 may be arranged, four cross ribs are arranged at each of the two ends of the floor panel 500 in the width direction, and the four cross ribs 510 are arranged at intervals in the length direction of the floor panel 500. In the four cross ribs 510, in an order, an included angle between the first side wall 511 of the second cross rib 510 and the floor panel 500 is the same as the electrophoresis angle for entering the pool, and an included angle between the second side wall 512 of the second cross rib 510 and the floor panel 500 is the same as the electrophoresis angle for exiting the pool. An included angle between the first side wall 511 of the fourth cross rib 510 and the floor panel 500 is the same as the electrophoresis angle for entering the pool, and an included angle between the second side wall 512 of the fourth cross rib 510 and the floor panel 500 is the same as the electrophoresis angle for exiting the pool. An included angle between the first side wall 511 of the third cross rib 510 and the floor panel 500 is the same as the electrophoresis angle for entering the pool, and an included angle between the second side wall 512 of the third cross rib 510 and the floor panel 500 is 175°. The first cross rib 510 communicates with the longitudinal rib 530 to meet exhausting.

In some embodiments, the height of the cross ribs 510 is ≤ 5 mm. Preferably, the cross ribs 510 have a height of 5 mm, which may be tightly assembled with a sealing strip 900 to meet sealing needs.

In some embodiments, the cross ribs 510 are located at the two ends of the floor panel 500 in the width direction, and the two ends of the floor panel 500 in the length direction are provided with joint ribs 218 for being connected to a cabin as well as to a rear floor respectively. The joint rib 218 at the front end may be in lap stroke penetration with a front cabin structure, which may improve a local modal state of a passenger in the front row as well as VTF, effectively preventing a problem of high-speed shaking of the floor. The joint rib 218 at the rear end is in lap-joint penetration with the rear floor, which may improve a local modal state of a passenger in the rear row as well as VTF, effectively preventing a problem of high-speed shaking of the floor.

It needs to be noted that the number of the cross ribs 510, the longitudinal ribs 530, and the penetrating ribs 540 may be determined according to the area of the floor itself, and the shape of the cross ribs 510, the longitudinal ribs 530, and the penetrating ribs 540 may be a rectangle, a circle, or a rectangle with a larger local width for the sake of having good strength, which is not specifically limited.

Referring to FIG. 1 and FIG. 2, in some embodiments, the floor assembly 1000 further includes at least one reinforcing skeleton assembly 700, the at least one reinforcing skeleton assembly 700 is located on at least one side of the cross beam assembly 800 in the axial direction of the longitudinal beams 100, and the reinforcing skeleton assembly 700 includes middle reinforcing members 310 and 410 and longitudinal reinforcing members arranged on two sides of the middle reinforcing members 310 and 410. The longitudinal reinforcing members and the middle reinforcing members 310 and 410 are connected by transverse reinforcing members, and the middle reinforcing members 310 and 410, the longitudinal reinforcing members and the transverse reinforcing members are all connected to the floor panel 500 and the main beam 210. In the reinforcing skeleton assembly 700, the middle reinforcing members 310 and 410 and the longitudinal reinforcing members 320 and 420 are arranged at intervals in the axial direction of the cross beam assembly 800, thus promoting the strength of the floor assembly 1000 in the length direction of the vehicle body, and the transverse reinforcing members 330 and 430 promote the strength of the floor assembly 1000 in the width direction of the vehicle body. The middle reinforcing members 310 and 410 and the longitudinal reinforcing members 320 and 420 are connected by the transverse reinforcing members 330 and 430 to form a structure shaped like a Chinese character " 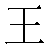 ". Such a structure of the combined design of the middle reinforcing members 310 and 410, the longitudinal reinforcing members 320 and 420, and the transverse reinforcing members 330 and 430 promotes the comprehensive strength of the floor assembly 1000, which, in combination with the integrated floor panel 500, ensures the modal state and rigidity of the large-sized floor panel 500. The middle reinforcing members 310 and 410, the longitudinal reinforcing members 320 and 420, and the transverse reinforcing members 330 and 430 may be made of reinforcing plates, and a width of the reinforcing plates may be adjusted according to actual needs to ensure both the strength and a weight reduction effect. At least one reinforcing skeleton assembly 700 being located on at least one side of the cross beam assembly 800 in the axial direction of the longitudinal beams 100 may be understood to be that when there is one reinforcing skeleton assembly 700, the reinforcing skeleton assembly 700 may be located at the rear end of the cross beam assembly 800, the reinforcing skeleton assembly 700 is a rear end structure assembly 400, the reinforcing skeleton assembly 700 may also be located at the front end of the cross beam assembly 800, and the reinforcing skeleton assembly 700 is a front end structure assembly 300; and when there are two reinforcing skeleton assemblies 700, the two reinforcing skeleton assemblies 700 are located at the front end and the rear end of the cross beam assembly 800 respectively and are a front end structure assembly 300 and a rear end structure assembly 400 respectively.

Continuing to refer to FIG. 1 and FIG. 2, in some embodiments, one of the reinforcing skeleton assemblies 700 is located at the front end of the cross beam assembly 800, and the middle reinforcing member 310 located at the front end of the cross beam assembly 800 constitutes a middle passage. The reinforcing skeleton assembly 700 located at the front end of the cross beam assembly 800 includes two cover plates respectively connected to the longitudinal beams 100, and the two cover plates are respectively connected to one ends of the two longitudinal reinforcing members away from the cross beam assembly 800. In this embodiment, the reinforcing skeleton assembly 700 serves as the front end structure assembly 300, and the two cover plates 340 are respectively connected to one ends of the two longitudinal reinforcing members 320 away from the cross beam assembly 800. The arrangement of the cover plates 340 may promote the small offset collision and the side column collision, and further can effectively prevent the deformation of parts in the process of transportation. In addition, the front end of the floor panel 500 is provided with the longitudinal ribs 530 or the penetrating ribs 540, which, in combination with the two cover plates 340, allow the floor assembly 1000 to have both good transverse and longitudinal strength performances at the front end. The floor panel 500 is provided with the cross ribs 510 at the rear end, and the combined arrangement of the cross ribs 510 of the floor panel 500 and the rear end structure assembly 400 shaped like a Chinese character " 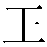 " allows the floor assembly 1000 to have both good transverse and longitudinal strength performances at the rear end.

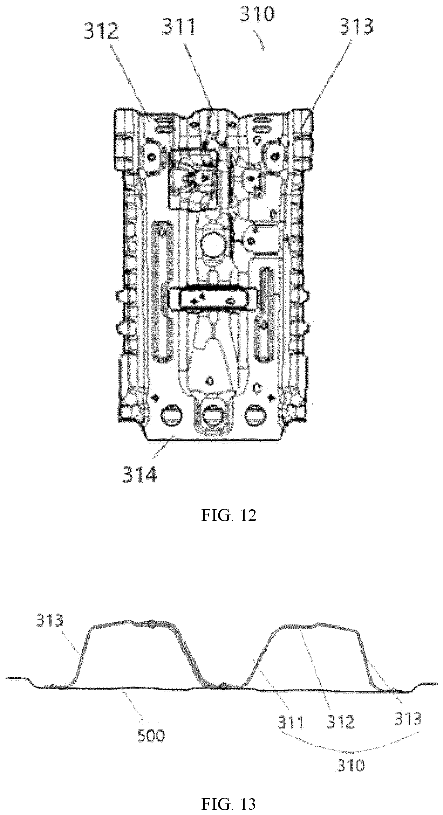

Referring to FIG. 12 and FIG. 13, the middle reinforcing member 310 located at the front end of the cross beam assembly 800 constitutes the middle passage. When the reinforcing structure 600 is reinforcing beams, two reinforcing beams may be arranged, and the two reinforcing beams correspond in position to the middle reinforcing member 310 of the reinforcing skeleton assembly 700 located at the front end. Moreover, spacing of the two reinforcing beams in the axial direction of the cross beam 200 is equal to a width of the middle reinforcing member 310 of the reinforcing skeleton assembly 700 located at the front end, i.e., the front end structure assembly 300, so that energy of the middle reinforcing member 310 of the front end structure assembly 300 can be effectively transferred to the rear part during a collision to maintain that a force during the collision can be effectively transferred, mitigating the damage to the vehicle. It needs to be noted herein that when the middle reinforcing member 310 of the front end structure assembly 300 is used as the middle passage, the middle reinforcing member 310 of the front end structure assembly 300 includes a top plate 312 and side plates 313 connected to two sides of the top plate 312 in the axial direction of the cross beam assembly 800, and the top plate 312 is provided with a concave portion 311 that extends in the axial direction of the longitudinal beams 100 to form an M-shape structure to improve the strength of the middle reinforcing member 310. In some embodiments, the top plate 312 is provided with a top face abutting edge 314, each of the two side plates 313 is provided with a side face abutting edge, the top face abutting edge 314 laps on a top 212 of the main beam 210 close to the front end structure assembly 300, and the two side face abutting edges abut on a side portion 213 of the main beam 210 close to the front end structure assembly 300. Since the top face abutting edge 314 of the middle passage laps on the top face of the main beam 210, the height of the middle passage does not exceed that of the main beam 210, and the height of the middle passage is smaller, about 48 mm, which is able to provide enough arrangement space for a double-layer air duct as well as for a water cup bracket, and the like.

The spacing of the two reinforcing beams in the axial direction of the cross beam 200 is maintained at a minimum of 212 mm. In the two cross beams 200, each main beam 210 uses an equal-section structure, and a section of the front cross beam of the front seat may be concave, or other shapes in the prior art, which is not limited herein. The structure of the equal-section main beam 210 is simple to realize by a technology, and the weight can be effectively reduced compared to thermoforming. At the same time, the selection of 1500 MPa martensitic steel can improve the collision effect of the whole vehicle. The section of the rear cross beam of the front seat is in in an M shape, which is simple to realize by a technology, and the weight can be effectively reduced compared to thermoforming. At the same time, the selection of 1500 MPa martensitic steel can improve the collision effect of the whole vehicle. The weight is reduced by about 1.5 kg. The strength performance and sizes of the front cross beam of the front seat and the rear cross beam of the front seat may be improved due to the use of the equal-section front cross beam of the front seat and rear cross beam of the front seat, and it is also possible to borrow the arrangement of the reinforcing beams in the Y direction without having to make a new part, which ensures the adjustability of performance changes.

A cross beam in the prior art is usually of a closed structure (a cross section is roughly rectangular or trapezoidal), a roll forming process is used, its closed section structure may produce constraints on resilience of the two ends of the cross beam after roll forming, and therefore structural members mounted on the cross beam in the prior art are usually not provided with a height adjustment function. Whereas the M-shaped section of the rear cross beam of the front seat in the present application is of an open structure, the material strength is high, the two ends of the cross beam of the open structure will rebound to a certain extent after roll forming, resulting in a non-negligible warping problem at the two ends of the cross beam, which affects the connection precision of the rear cross beam of the front seat and the longitudinal beam, and the aforesaid height-adjustable connecting assembly 220 may ensure the lap-joint precision between the main beam 210 of the open structure and the longitudinal beam 100.

The floor assembly 1000 provided by the present disclosure at least has the following advantages.

An adjustable relative position of the cross beam 200 and the longitudinal beams 100 is realized through the height-adjustable connecting assemblies 220, and an adjustable position of the seat in the X direction, Y direction, and Z direction is realized through the seat brackets 230, so that the floor assembly 1000 may be applicable to different vehicle models, thereby improving the universality of the floor assembly 1000, and saving the manufacturing cost.

The floor panel 500 is a large integrated panel with a large size, and provided with the cross ribs 510, the longitudinal ribs 530 and the penetrating ribs 540 matched with the front end structure assembly 300, the rear end structure assembly 400, and the cross beam assembly 800, which ensures both the modal state and the rigidity of the floor panel 500, and also ensures the exhausting effect during an electrophoresis stage.

The front end structure assembly 300 and the rear end structure assembly 400 are connected by spot welding, constituting an integrated beam frame structure, and the front end structure assembly 300 and the rear end structure assembly 400 are both of a structure shaped like a Chinese character " 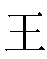 ", which is symmetrically arranged, ensuring the comprehensive strength of the front end and the rear end of the floor assembly 1000, and guaranteeing the transfer of front-collision and side-collision forces, and a beautiful and durable appearance is realized.

When the floor assembly 1000 is used as the front floor assembly, the arrangement of the two cross beams 200 fully meets the ergonomic needs, and can meet the maximization of passenger space needs of vehicle models with various wheelbases. The two cross beams 200 are connected through the two reinforcing beams corresponding to the position of the middle passage of the front end structure assembly 300, which ensures that the collision performance can be maximized. The two cross beams 200 both use rolled beams of an equal-section structure, which can effectively reduce the weight and ensure strength.

The present disclosure further provides a vehicle, including the foregoing floor assembly 1000.

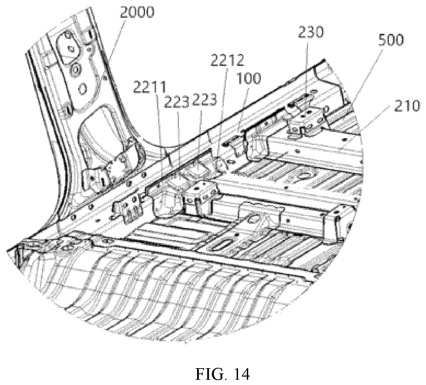

Referring to FIG. 14, in some embodiments, the vehicle further includes two columns B 2000, the two columns B 2000 are connected to the longitudinal beams 100 respectively, and in the axial direction of the longitudinal beams 100, the amount of overlapping between the cross beam assembly 800 close to the rear end structure assembly 400 and the columns B 2000 exceeds 50% of a width of the columns B 2000, so that the force transfer for the side collision may be effectively guaranteed. During mounting, the cross beam assembly 800 close to the rear end structure assembly 400 overlaps the front ends of the columns B 2000.

The above cited embodiments are preferred implementations of the present disclosure, are only used to facilitate the description of the present disclosure, and are not intended to limit the present disclosure in any form. Equivalent embodiments with local changes or modifications made by any person having ordinary knowledge in the art using the technical content disclosed in the present disclosure without departing from the scope of the technical features proposed in the present disclosure, and without departing from the content of the technical features of the present disclosure, are still within the scope of the technical features of the present disclosure.

## Claims

1. A floor assembly, comprising a floor panel, a cross beam assembly, and two longitudinal beams arranged opposite each other, wherein the two longitudinal beams are both connected to the floor panel, and the cross beam assembly comprises:
a cross beam, comprising a main beam connected to the floor panel and connecting assemblies connected to two ends of the main beam, wherein the connecting assemblies are connected to the longitudinal beams; and
two or more seat brackets, connected to the main beam;
wherein a height of the connecting assemblies and/or the seat brackets is adjustable, and in an axial direction of the longitudinal beams, gaps exist between the seat brackets and the main beam.

2. The floor assembly according to claim 1, wherein the height of the seat bracket is adjustable, the seat bracket comprises a first support member connected to the main beam and a second support member connected to a seat, and in a vertical direction, the first support member and the second support member at least partially overlap and are fixedly connected.

3. The floor assembly according to claim 1, wherein the height of the connecting assembly is adjustable, the connecting assembly comprises a longitudinal beam connecting member connected to the longitudinal beam and a cross beam connecting member connected to the main beam, and in a vertical direction, the longitudinal beam connecting member and the cross beam connecting member at least partially overlap and are fixedly connected.

4. The floor assembly according to claim 3, wherein the cross beam connecting member is fixedly connected to the longitudinal beam, the main beam and the floor panel.

5. The floor assembly according any one of claims 1 to 4, wherein a plurality of the cross beams are provided, the plurality of the cross beams are arranged at intervals in the axial direction of the longitudinal beams; and a reinforcing structure extending in the axial direction of the longitudinal beams is arranged between the every two adjacent cross beams.

6. The floor assembly according any one of claims 1 to 4, wherein the floor panel is of an integrated structure.

7. The floor assembly according to claim 6, wherein the floor panel is provided with a penetrating rib arranged in the axial direction of the longitudinal beam in a penetrating manner, a plurality of longitudinal ribs extending in the axial direction of the longitudinal beam, and a plurality of cross ribs extending in an axial direction of the cross beam assembly, and the plurality of longitudinal ribs and the plurality of cross ribs are all distributed on two sides of the penetrating rib.

8. The floor assembly according any one of claims 1-3, wherein the floor assembly further comprises at least one reinforcing skeleton assembly, the at least one reinforcing skeleton assembly is located on at least one side of the cross beam assembly in the axial direction of the longitudinal beam, the reinforcing skeleton assembly comprises a middle reinforcing member and longitudinal reinforcing members arranged on two sides of the middle reinforcing member, the longitudinal reinforcing member and the middle reinforcing member are connected by a transverse reinforcing member, and the middle reinforcing member, the longitudinal reinforcing member and the transverse reinforcing member are all connected to the floor panel and the main beam.

9. The floor assembly according to claim 8, wherein one reinforcing skeleton assembly is located at a front end of the cross beam assembly, the middle reinforcing member located at the front end of the cross beam assembly constitutes a middle passage; and the reinforcing skeleton assembly located at the front end of the cross beam assembly comprises two cover plates respectively connected to the longitudinal beam, and the two cover plates are respectively connected to one ends of the two longitudinal reinforcing members away from the cross beam assembly.

10. A vehicle, comprising the floor assembly according to any one of claims 1 to 9.
